# EUROPÄISCHE PATENTSCHRIFT

(11) **EP 0 626 565 B1**
(45) Veröffentlichungstag und Bekanntmachung des Hinweises auf die Patenterteilung: **10.09.1997**
(21) Anmeldenummer: 94104780.5
(22) Anmeldetag: 25.03.1994
(51) Int. Cl.: G01D 11/24, G01P 1/02

(54) **Gehäuse für ein elektrisches bzw. elektromagnetisches Bauteil, insbesondere Sensorgehäuse**
Housing for an electrical or electromagnetic component, in particular a sensor housing
Boîtier pour un composant électrique respectivement électromagnétique, en particulier un boîtier d'un capteur

(30) Priorität: 28.05.1993 DE 4317848
(43) Veröffentlichungstag der Anmeldung: 30.11.1994
(73) Patentinhaber: WABCO GmbH, 30453 Hannover (DE)
(72) Erfinder: Petersen, Erwin, Dr., D-31515 Wunstorf (DE); Singbartl, Günther, D-30161 Hannover (DE); Dalisdas, Jürgen, D-30627 Hannover (DE)
(74) Vertreter: Schrödter, Manfred, Dipl.-Ing.

(56) Entgegenhaltungen:
- WO-A-93/01500
- US-A- 4 647 892
- US-A- 5 142 103

## Beschreibung

Die Erfindung betrifft ein Gehäuse für ein elektrisches bzw. elektromagnetisches Bauteil, insbesondere Sensorgehäuse, gemäß dem Oberbegriff des Patentanspruchs 1.

Ein derartiges ein elektrisches bzw. elektromagnetisches Bauteil enthaltendes Gehäuse ist aus der DE-OS 39 02 218 bekannt.

Das Gehäuse setzt sich aus einem von einem Boden verschlossenen topfförmigen Gehäuseteil und einem dem Boden gegenüber angeordneten Verschlußteil zusammen. Im Gehäuse ist auf einem Spulenträger eine Magnetspule angeordnet. Der Spulenträger wird unter Vorspannung auf dem Boden des Gehäuses gehalten.

Ein solcher Art ausgebildetes Gehäuse wird z. B. als Sensor zur Überwachung des Drehverhaltens eines Fahrzeugrades verwendet. Der Sensor wirkt dabei mit einem am Fahrzeugrad befestigten Polrad zusammen, wobei der Sensor und das Polrad so zueinander angeordnet sind, daß der Boden des Gehäuses dem Polrad zugewandt ist.

Da bei Drehzahl-Sensoreinrichtungen zwischen dem Polrad und dem Boden des Sensorgehäuses nur ein geringer Luftspalt vorhanden sein darf, um eine gute Signalerzeugung zu gewährleisten, kann nicht ausgeschlossen werden, daß bei Auftreten eines Schadens an der Lagerung des Fahrzeugrades das Fahrzeugrad eine Bewegung ausführt, die zu einem harten Anschlagen des Polrades an den Boden des Sensorgehäuses führen kann. Auch bei der Montage des Fahrzeugrades kann ein hartes Anschlagen des Polrades an den Drehzahlsensor nicht immer verhindert werden.

Das kann zu einer Verformung des Bodens des Sensorgehäuses und somit zu einer Beschädigung des elektrischen Bauteiles im Sensorgehäuse führen.

Der Erfindung liegt deshalb die Aufgabe zugrunde, ein Gehäuse der eingangs erwähnten Art so auszubilden, daß bei mechanischer Krafteinwirkung auf den Boden des Gehäuses eine Beschädigung des elektrischen bzw. elektromagnetischen Bauteiles weitestgehend vermieden wird.

Diese Aufgabe wird mit der in dem Patentanspruch 1 angegebene Ausführung der Erfindung gelöst. Weiterbildungen und vorteilhafte Ausgestaltungen der Erfindung sind in den abhängigen Ansprüchen angegeben.

Anhand der Zeichnung werden nachfolgend drei Ausführungsbeispiele der Erfindung näher erläutert. Es zeigen:
- Figur 1: einen Sensor mit einem topfförmig ausgebildeten Gehäuse, wobei der Boden des Gehäuses durch Prägen erzeugte Erhöhungen und Vertiefungen aufweist, wobei zwischen Spulenträger und Boden des Gehäuses ein Luftspalt vorhanden ist;
- Figur 2: eine Draufsicht auf die dem Innenraum des Gehäuses abgewandte Seite des Bodens;
- Figur 3: einen Schnitt durch den Boden des Gehäuses nach der Linie A-A in Figur 2;
- Figur 4: den die Magnetspule aufweisenden Teil des Sensors, wobei zwischen Spulenträger und Boden des Gehäuses ein Luftspalt vorhanden ist, in welchem ein Polster angeordnet ist;
- Figur 5: eine Draufsicht auf die dem Innenraum zugewandte Seite des mit den rippenartigen Anformungen versehenen Bodens des Gehäuses und
- Figur 6: einen Schnitt durch den Boden des Gehäuses nach der Linie B-B in Fig. 5.

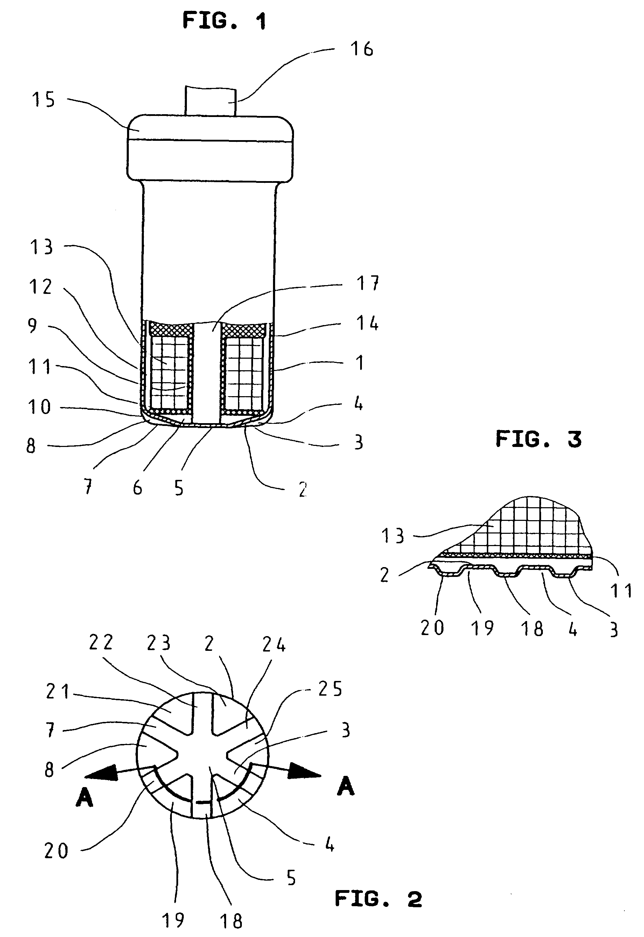

Der in Figur 1 gezeigte, als Drehgeschwindigkeits-Sensor ausgebildete Sensor besitzt ein toppförmig ausgebildetes Gehäuse, welches aus einem an seinem einen Ende von einem Boden (2) verschlossenen rohrförmigen Körper (1) besteht, wobei der Boden (2) mit dem rohrförmigen Körper (1) einstückig ausgebildet ist. Der rohrförmige Körper (1) wird nachfolgend als zylindrischer Bereich des Gehäuses (1, 2) bezeichnet. Die dem Boden (2) gegenüberliegende Seite des zylindrischen Bereiches (1) wird von einem vorzugsweise aus Kunststoff oder Gummi gefertigten Verschlußteil (15) verschlossen. Als Verschlußteil kann auch Vergußmasse dienen, mittels welcher das Gehäuse (1, 2) nach dem Einbringen von Bauteilen in den Gehäuseinnenraum verschlossen wird.

Das toppförmige Gehäuse (1, 2) besteht aus einem metallischen Werkstoff, wie z. B. Stahlblech oder Aluminium, und ist im Tiefziehverfahren hergestellt.

Der Boden (2) weist auf seiner den Innenraum (12) des Gehäuses (1, 2) begrenzenden Seite eine zentrisch angeordnete Vertiefung auf, die sich auf der dem Innenraum (12) des Gehäuses abgewandten Seite des Bodens (2) als Erhöhung (5) darstellt. Die Vertiefung bzw. die Erhöhung (5) ist durch Prägen hergestellt. Der zylindrische Bereich (1) und die Erhöhung (5) sind aufgehärtet, so daß sie einen höheren Härtegrad haben als der als Übergangsbereich (10) dienende ringförmige Bereich des Bodens (2) zwischen der Erhöhung (5) und dem zylindrischen Bereich (1) des Gehäuses (1, 2).

Im Innenraum (12) des Gehäuses (1, 2) ist ein als Magnetspule ausgebildetes elektromagnetisches Bauteil angeordnet. Die Magnetspule besteht aus einer Spulenwicklung (13), die auf einem rohrförmigen Teil (9) eines Spulenträgers (9, 11, 14) angeordnet ist, und einem im Spulenträger (9, 11, 14) in Richtung der Längsachse des Spulenträgers (9, 11, 14) verlaufend angeordneten Kern (17), dessen eines Ende dem Boden (2) des Gehäuses (1, 2) zugewandt ist. Das rohrförmige Teil (9) des Spulenträgers (9, 11, 14) weist an seinen beiden Enden je ein sich radial nach außen erstreckendes ringförmiges Teil (11, 14) auf. Die beiden ringförmigen Teile (11, 14) fixieren die Spulenwiklung (13) in Richtung der Längsachse des Spulenträgers (9, 11, 14). Die Magnetspule (13, 17) ist über eine aus dem Gehäuse (1, 2) herausgeführte elektrische Leitung (16) mit einem außerhalb des Gehäuses (1, 2) befindlichen, nicht dargestellten elektrischen Bauteil verbindbar. Der Boden (2) des Gehäuses (1, 2) ist vom Innenraum (12) des Gehäuses (1, 2) weg leicht gewölbt ausgebildet. Anstelle den Boden (2) gewölbt auszubilden, kann dieser auch dachförmig ausgebildet werden. Die Erhöhung (5) ist sowohl bei gewölbter als auch bei dachförmiger Ausbildung des Bodens (2) eben ausgebildet. An diese ebene Fläche der Erhöhung (5) des Bodens (2) schließt dann schräg auf die Wand des zylindrischen Bereiches (1) des Gehäuses (1, 2) zulaufend ein ringförmiger Bereich des Bodens (2) an, der in den zylindrischen Bereich (1) des Gehäuses (1, 2) übergeht. Der Boden (2) und der zylindrische Bereich (1) des Gehäuses (1, 2) weisen den abgerundeten Übergangsbereich (10) auf, dessen Härtegrad vom Boden (2) ausgehend zur Wand des zylindrischen Bereiches (1) des Gehäuses (1, 2) hin zunimmt.

Der Innendurchmesser des zylindrischen Bereiches (1) des Gehäuses (1, 2) und der Außendurchmesser des auf der Seite des Bodens (2) des Gehäuses (1, 2) gelegenen ringförmigen Teiles (11) des Spulenträgers (9, 11, 14) sind so gewählt, daß der Spulenträger (9, 11, 14) mit seinem auf der Seite des Bodens (2) gelegenen ringförmigen Teil (11) auf dem äußeren Randbereich des gewölbt oder schräg ausgebildeten Bereiches des Bodens (2) oder auf dem sich vom Boden (2) zur Wand des zylindrischen Bereiches (1) hin erstreckenden Übergangsbereich (10) des Gehäuses (1, 2) aufliegt, und zwar auf dem den höheren Härtegrad aufweisenden Bereich des Übergangsbereiches (10).

Dadurch verbleibt zwischen der dem Boden (2) des Gehäuses (1, 2) zugewandten Seite des Spulenträgers (9, 11, 14) und dem Boden (2) ein freier Raum (6).

Der Boden (2) des Gehäuses (1, 2) weist, z. B. durch Prägen, Drücken, Pressen oder auch andere Verformungstechniken erzeugte, rippenartige Erhöhungen (3, 7) und Vertiefungen (4, 8) auf, die sich vom äußeren Randbereich der zentrisch am Boden (2) angeordneten Erhöhung (5) ausgehend radial nach außen, bis an den Übergangsbereich (10) von Boden (2) und zylindrischem Bereich (1) des Gehäuses (1, 2) heran erstrecken. Die Erhöhungen (3, 7) erstrecken sich vom Boden (2) des Gehäuses (1, 2) ausgehend, auf der dem Innenraum (11) des Gehäuses (1, 2) abgewandten Seite (2) vom Boden (2) weg. Von den einander zugewandten Seiten von je zwei Erhöhungen wird jeweils eine Vertiefung (4, 8) begrenzt. Der nicht verformte Bereich des Bodens (2) ist dann der Boden (Grund) der Vertiefung (4, 8).

Figur (2) zeigt eine Draufsicht auf die dem Innenraum (12) des Gehäuses (1, 2) abgewandte Seite des Bodens (2). Der besseren Übersicht halber sind die den in Figur (1) gezeigten Bereichen gleichen Bereiche mit gleichen Bezugsziffern versehen.

Der Boden (2) weist die zentrisch angeordnete Erhöhung bzw. Vertiefung (5) auf. Die Erhöhung bzw. Vertiefung (5) ist so ausgebildet, daß sie im Gegensatz zum Boden (2) des Gehäuses (1, 2) eine ebene Stirnfläche besitzt. Am Boden (2) sind sechs nach Art von Versteifungsrippen ausgebildeter Erhöhungen (3, 18, 20, 7, 22, 24) vorgesehen, die sich, von der zentrisch angeordneten Erhöhung bzw. Vertiefung (5) ausgehend, radial nach außen, bis in die Nähe des äußeren Randbereiches des Bodens (2) hin erstrecken. Die rippenartigen Erhöhungen (3, 18, 20, 7, 22, 24) haben gleichen Abstand zueinander und begrenzen seitlich sechs sich durch die Anordnung der Erhöhungen (3, 18, 20, 7, 22, 24) ergebende Vertiefungen (4, 19, 8, 21, 23, 25). Gemäß Fig. 1 sind am Boden des Gehäuses sechs rippenartige Erhöhungen und sechs Vertiefungen angeordnet. Selbstverständlich können auch mehr oder weniger als sechs Erhöhungen und Vertiefungen vorgesehen werden.

In Figur 3 ist ein Schnitt durch den Boden (2) nach der Schnittlinie A-A gemäß Figur (2) gezeigt. Der besseren Übersicht halber sind die den in Figur 2 gezeigten Bereichen gleichen Bereiche mit gleichen Bezugsziffern versehen. Zudem ist des besseren Verständnisses wegen ein Teil des Spulenträgers mit Spulenwicklung (13) und dessen Lage zum Boden (2) des Gehäuses (1, 2) dargestellt.

Der ringförmige Teil (11) des Spulenträgers (9, 11, 14) liegt dem Boden (2) des Gehäuses (1, 2) gegenüber. Mit den Bezugsziffern (3, 18 und 20) sind die Erhöhungen des Bodens (2) bezeichnet. Die Vertiefungen sind durch die Bezugsziffern (4, 19) ausgewiesen.

Die rippenartigen Erhöhungen (3, 18 und 20) und die Vertiefungen (4, 19) befinden sich gemäß der mit den Figuren (1 bis 3) dargestellten Ausführungsform der Erfindung auf der dem Innenraum (12) des Gehäuses (1, 2) abgewandten Seite des Bodens (2). Aus fertigungstechnischen Gründen ist diese Ausbildung von Vorteil. Es ist jedoch auch möglich, die rippenartigen Erhöhungen und die Vertiefungen auf der dem Innenraum (12) des Gehäuses (1, 2) zugewandten Seite des Bodens (2) vorzusehen, d. h., die rippenartigen Erhöhungen so auszubilden, daß sie sich in den Innenraum (12) des Gehäuses (1, 2) hinein, in Richtung auf den Spulenträger (9, 11, 14) zu erstrecken. Dadurch ergibt es sich natürlich auch, daß die Vertiefungen sich ebenfalls auf der dem Innenraum (12) des Gehäuses (1, 2) zugewandten Seite des Bodens (2) befinden. In beiden Ausführungsformen bildet der nicht verformte Bereich des Bodens (2) des Gehäuses (1, 2) den Boden (2) oder auch den Grund der Vertiefung.

Bei Stoß- oder Schlageinwirkung auf den Boden (2) des Gehäuses (1, 2) von außen, im wesentlichen in Richtung der Längsachse des Gehäuses (1, 2), wird der Boden (2) aufgrund der rippenartigen Erhöhungen entweder garnicht oder nur soweit verformt, daß der Boden (2) allenfalls bis dicht an den ringförmigen Teil (11) des Spulenträgers (9, 11, 14) gelangt. Dabei wird der Übergangsbereich (10) vom Boden (2) zum zylindrischen Teil (1) des Gehäuses (1, 2) verformt. Die rippenartigen Erhöhungen (3, 18, 20) bilden primär mit dem Übergangsbereich (10) und dem freien Raum (6) zwischen Boden (2) und dem Spulenträger (9, 11, 14) zusammen eine Knautschzohne, durch welche der das elektrische bzw. das elektromagnetische Bauteil aufnehmende Bereich des Gehäuses (1, 2) auch bei Deformation eines Teiles des Gehäuses (1, 2) erhalten bleibt.

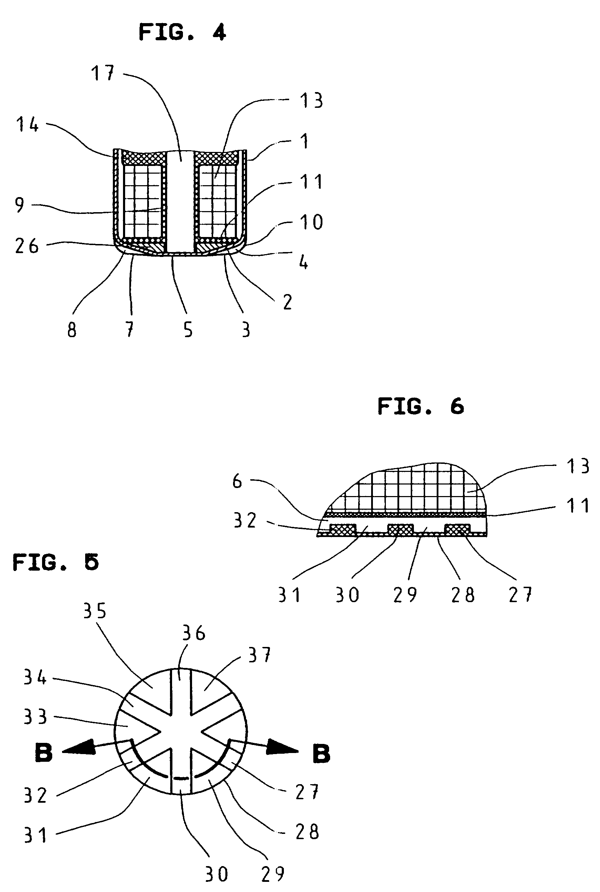

Um den Schutz für das elektrische bzw. elektromagnetische Bauteil noch zu erhöhen, kann, wie in Figur 4 dargestellt, zwischen dem elektrischen bzw. elektromagnetischem Bauteil und dem mit den Versteifungsrippen versehenen Boden des Gehäuses Dämpfungsmaterial vorgesehen werden.

Der besseren Übersicht halber sind die den in Figur 1 gezeigten Bauteilen gleichen Bauteile mit gleichen Bezugsziffern versehen. Das Gehäuse gemäß Figur 4 ist genauso ausgebildet wie das in Figur 1 gezeigte Gehäuse.

Der Boden (2) des aus dem zylindrischen Bereich (1) und dem Boden (2) bestehenden Gehäuses (1, 2) besitzt die sich vom Innenraum des Gehäuses (1, 2) weg erstreckende Vertiefung bzw. Erhöhung (5) und die sich von der Vertiefung bzw. Erhöhung (5) ausgehend radial nach außen, in Richtung auf den Rand des Bodens (2) zu erstreckenden rippenartigen Erhöhungen (3, 7), die zusammen mit den nicht verformten Bereichen des Bodens (2) die Vertiefungen (4, 8) begrenzen.

Im Gehäuse (1, 2) ist die Magnetspule, bestehend aus Spulenträger (9, 11, 14) mit Spulenwicklung (13) und Kern (17), angeordnet, und zwar so, daß zwischen dem Boden (2) des Gehäuses (1, 2) und dem Spulenträger (9, 11, 14) ein freier Raum verbleibt. Dieser freie Raum ist mit einem als Scheibe (26) ausgebildeten Dämpfungsmittel weitestgehend ausgefüllt.

Die Scheibe (26) besteht aus einem elastisch verformbaren oder auch aus einem plastisch verformbaren Material, wie z. B. Gummi, Metall oder Kunststoff. Die Scheibe (26) ist so bemessen, daß sie mit ihrer einen Seite auf dem Boden (2) des Gehäuses (1, 2) aufliegt und mit ihrer dieser Seite abgewandten anderen Seite mit dem ringförmigen Teil (11) des Spulenträgers (9, 11, 14) Kontakt hat. Sie dient praktisch als Abstützung für den Spulenträger (9, 11, 14). Wenn die Scheibe (26) aus Metall besteht, ist sie in der Art einer Federscheibe ausgebildet.

Durch eine zentrisch angeordnete Ausnehmung in der Scheibe (26) ist der als Polstift dienende Kern (17) der Magnetspule hindurchgeführt, und zwar soweit, daß er an der dem Innenraum des Gehäuses (1, 2) zugewandten Seite der Vertiefung bzw. Erhöhung (5) anliegt. Der Kern (17) ist in Richtung der Längsachse des Spulenträgers (9, 11, 14) bewegbar im Spulenträger (9, 11, 14) angeordnet und wird durch die Kraft einer nicht dargestellten Feder mit seinem einen Ende am Boden (2) des Gehäuses (1, 2) bzw. am Boden der Vertiefung bzw. Erhöhung (5) gehalten.

Es ist auch möglich, den freien Raum zwischen dem Boden (2) des Gehäuses (1, 2) und dem Spulenträger (9, 11, 14) mit einer elastisch oder auch plastisch verformbaren Vergußmasse auszufüllen, wobei diese Masse dann die Funktion der Scheibe übernimmt. Die Anordnung einer Scheibe aus elastisch oder plastisch verformbaren Material ist dann natürlich nicht mehr erforderlich. Die Masse kann am Spulenträger haftend als Scheibe ausgeformt sein.

Als Material für die Scheibe oder für die Vergußmasse kann vorteilhafterweise z. B. ein Silikon-Gel genommen werden, durch welches lokal eingeleitete Verformungen und Kraftspitzen fluidartig vergleichmäßigt werden.

Das Gehäuse kann, wie bereits erwähnt, aus einem metallischen Werkstoff bestehen und z. B. im Tiefziehverfahren hergestellt werden. Dieses Verfahren ist geeignet, um eine Aufhärtung des zylindrischen Bereiches (1) des Gehäuses (1, 2) zu erreichen. Durch die Herstellung der zentrisch am Boden (2) angeordneten Vertiefung bzw. Erhöhung (5) durch Prägen wird eine Aufhärtung dieses Bereiches des Bodens (2) erzielt.

Wird das Gehäuse (1, 2) aus Kunststoff oder aus Aluminium im Fließpreßverfahren gefertigt, so können die rippenartigen Erhöhungen am Boden (2) durch Anformen hergestellt werden.

Eine solche mögliche Ausführung des Gehäusebodens (2) ist in den Figuren 5 und 6 dargestellt.

In Figur 5 ist die Draufsicht auf die dem Innenraum des Gehäuses zugewandte Seite des mit den rippenartigen Anformungen versehenen Bodens des Gehäuses dargestellt.

Das Gehäuse besitzt einen Boden (28), an welchem rippenartige Erhöhungen (27, 30, 32, 34, 36, 38) angeformt sind. Die rippenartigen Erhöhungen (27, 30, 32, 34, 36, 38) sind an der dem Innenraum des Gehäuses zugewandten Seite des Bodens (28) sternförmig angeordnet und begrenzen mit ihren Seitenflächen Vertiefungen (29, 31, 33, 35, 37, 39), deren Grund vom Boden (28) gebildet wird. Die rippenartigen Erhöhungen (27, 30, 32, 34, 36, 38) sind im Zentrum des Bodens (28) untereinander verbunden und erstrecken sich radial nach außen zum Rand des Bodens (28) hin.

Figur 6 zeigt einen Schnitt durch den Boden des Gehäuses nach der Linie B-B in Fig. 5.

Die rippenartigen Erhöhungen (27, 30, 32) sind auf der dem Innenraum des Gehäuses zugewandten Seite des Bodens (28) angeordnet und erstrecken sich in Richtungen auf den Spulenträger (11) und die Spulenwicklung (13) zu. Mit ihren einander zugewandten Seiten begrenzen sie die Vertiefungen (29, 31). Zwischen dem Spulenträger (11) und den Erhöhungen (27, 30, 32) ist ein Luftspalt (6) vorgesehen.

Die rippenartigen Erhöhungen (27, 30, 32, 34, 36, 38) und die Vertiefungen (29, 31, 33, 35, 37, 39) können selbstverständlich auch auf der dem Innenraum des Gehäuses abgewandten Seite des Bodens (2) angeordnet sein.

Das Gehäuse kann, wie beschrieben, eine zylindrische Form haben, es kann jedoch auch oval oder auch vieleckig ausgebildet sein oder auch jede beliebige andere Form aufweisen. Von Bedeutung für die Erfindung ist, daß der Boden rippenartige Versteifungen hat oder/und daß zwischen dem Boden und dem elektrischen bzw. elektromagnetischen Bauteil ein Luftspalt (freier Raum) vorhanden ist. Bereits dieser freie Raum bietet für das elektrische bzw. elektromagnetische Bauteil Schutz gegen Beschädigung bei Auftreten von Verformungen des Bodens des Gehäuses, auch dann wenn rippenartige Versteifungen am Boden nicht vorhanden sind. Der Schutz des elektrischen bzw. elektromagnetischen Bauteiles wird durch die Anordnung von rippenartigen Versteifungen am Boden des Gehäuses jedoch erheblich verbessert.

Durch das Vorhandensein eines Übergangsbereiches vom Boden zu der seitlichen Wand des Gehäuses, welcher einen geringeren Härtegrad aufweist als die seitliche Wand des Gehäuses, läßt sich die erwähnte Knautschzone besser verwirklichen.

## Patentansprüche

1. Gehäuse für ein elektrisches bzw. elektromagnetisches Bauteil, insbesondere Sensorgehäuse, mit folgenden Merkmalen:
a) das Gehäuse besteht aus einem an seinem einen Ende von einem Boden (2) verschlossenen rohrförmigen Körper (1);
b) im Gehäuse (1, 2) ist ein elektrisches bzw. elektromagnetisches Bauteil (9, 11, 14, 13, 17) angeordnet;
dadurch gekennzeichnet, daß der Boden (2, 28) Erhöhungen (3, 18, 20, 7, 22, 24, 27, 30, 32, 34, 36, 38) aufweist, die nach Art von Versteifungsrippen ausgebildet sind und die sich vom mittleren Bereich des Bodens (2, 28) ausgehend radial nach außen in Richtung auf den äußeren Rand des Bodens (2, 28) zu erstrecken und die nach Art einer Knautschzone verformbar sind.

2. Gehäuse nach Anspruch 1, dadurch gekennzeichnet, daß die Erhöhungen (3, 18, 20, 7, 22, 24) von durch Drücken oder Prägen erzeugten Verformungen des Bodens (2) des Gehäuses (1, 2) gebildet werden.

3. Gehäuse nach Anspruch 1, dadurch gekennzeichnet, daß der Boden (2) eine zentrisch angeordnete Erhöhung (5) aufweist, von welcher ausgehend sich die als Versteifungsrippen dienenden Erhöhungen (3, 18, 20, 7, 22, 24) radial nach außen in Richtung auf den äußeren Rand des Bodens (2) zu erstrecken.

4. Gehäuse nach Anspruch 1, dadurch gekennzeichnet, daß das elektrische bzw. elektromagnetische Bauteil (9, 11, 14, 13, 17) so im Gehäuse (1, 2) angeordnet ist, daß zwischen dem Boden (2) und dem elektrischen bzw. elektromagnetischen Bauteil (9, 11, 14, 13, 17) ein freier Raum (6) verbleibt.

5. Gehäuse nach wenigstens einem der vorhergehenden Ansprüche, dadurch gekennzeichnet, daß zwischen dem Boden (2) des Gehäuses (1, 2) und dem elektrischen bzw. elektromagnetischen Bauteil (9, 11, 14, 13, 17) ein elastisch oder plastisch verformbares Dämpfungsmittel (26) angeordnet ist.

6. Gehäuse nach Anspruch 5, dadurch gekennzeichnet, daß das Dämpfungsmittel von einer elastisch oder plastisch verformbaren Vergußmasse gebildet ist.

7. Gehäuse nach Anspruch 5, dadurch gekennzeichnet, daß das Dämpfungsmittel aus einer elastisch oder plastisch verformbaren Scheibe besteht.

8. Gehäuse nach wenigstens einem der vorhergehenden Ansprüche 5 - 7, dadurch gekennzeichnet, daß das Dämpfungsmittel aus einem Silikon-Gel besteht.

9. Gehäuse nach wenigstens einem der vorhergehenden Ansprüche, dadurch gekennzeichnet, daß das Gehäuse (1, 2) aus einem metallischen Werkstoff besteht.

10. Gehäuse nach wenigstens einem der vorhergehenden Ansprüche, dadurch gekennzeichnet, daß der rohrförmige Körper (1) des Gehäuses (1, 2) und die zentrisch angeordnete Erhöhung (5) des Bodens (2) einen höheren Härtegrad aufweisen, als der sich von der Erhöhung bzw. Vertiefung (5) zum rohrförmigen Körper (1) hin erstreckende Bereich des Bodens (2).

11. Gehäuse nach wenigstens einem der vorhergehenden Ansprüche, dadurch gekennzeichnet, daß der Boden (2) vom Innenraum des Gehäuses weg gewölbt ausgebildet ist.

12. Gehäuse nach wenigstens einem der vorhergehenden Ansprüche, dadurch gekennzeichnet, daß die Erhöhungen (3, 18, 20, 7, 22, 24, 27, 30, 32, 34, 36, 38) auf der dem Innenraum des Gehäuses (1, 2) zugewandten Seite des Bodens (2, 28) gelegen sind.

13. Gehäuse nach wenigstens einem der vorhergehenden Ansprüche, dadurch gekennzeichnet, daß die Erhöhungen (3, 18, 20, 7, 22, 24, 27, 30, 32, 34, 36, 38) auf der dem Innenraum (12) des Gehäuses (1, 2) abgewandten Seite des Bodens (2, 28) gelegen sind.

14. Gehäuse nach wenigstens einem der vorhergehenden Ansprüche, dadurch gekennzeichnet, daß das Gehäuse aus Kunststoff besteht und die nach Art von Versteifungsrippen ausgebildeten Erhöhungen von Anformungen (27, 30, 32, 34, 36, 38) an dem Boden (28) des Gehäuses gebildet werden.

15. Gehäuse nach wenigstens einem der vorhergehenden Ansprüche, gekennzeichnet durch die folgenden Merkmale:
a) das Gehäuse (1, 2) weist einen den rohrförmigen Körper (1) mit dem Boden (2) verbindenden Übergangsbereich (10) auf;
b) das elektrische bzw. elektromagnetische Bauteil ist Bestandteil eines Drehzahlsensors und weist einen Spulenträger (9, 11, 14), eine auf diesem angeordnete Spulenwicklung (13) und einen im Spulenträger (9, 11, 14), in Richtung der Längsachse des Spulenträgers (9, 11, 14) verlaufend, angeordneten Kern (17) auf, wobei das eine Ende des Kerns (17) dem Boden (2) des Gehäuses (1, 2) zugewandt ist;
c) der Spulenträger (9, 11, 14) mit Spulenwicklung (13) und Kern (17) ist so im Gehäuse (1, 2) angeordnet, daß er mit seiner dem Boden (2) des Gehäuses (1, 2) zugewandten Seite (14) auf dem Übergangsbereich (10) bzw. auf dem äußeren Randbereich des Bodens (2) aufliegt.

16. Gehäuse nach Anspruch 15, dadurch gekennzeichnet, daß der Kern (17) in Richtung der Längsachse des Spulenträgers (9, 11, 14) bewegbar im Spulenträger (9, 11, 14) angeordnet ist und von einem Federelement mit seinem einen Ende gegen den Boden (2) des Gehäuses (1, 2) gedrückt wird.

## Claims

1. Housing for an electrical or electromagnetic component, especially a sensor housing, having the following features:
a) the housing consists of a tubular body (1) closed at its one end by a base (2);
b) an electrical or electromagnetic component (9, 11, 14, 13, 17) is arranged in the housing (1, 2);
characterised in that the base (2, 28) has raised parts (3, 18, 20, 7, 22, 24, 27, 30, 32, 34, 36, 38) which are constructed in the form of reinforcing ribs and which, starting from the middle region of the base (2, 28), extend radially outwards towards the outer edge of the base (2, 28) and which are deformable in the manner of a crumple zone.

2. Housing according to claim 1, characterised in that the raised parts (3, 18, 20, 7, 22, 24) are formed by deformations of the base (2) of the housing that are created by pressing or embossing.

3. Housing according to claim 1, characterised in that the base (2) comprises a centrally arranged raised part (5), starting from which the raised parts (3, 18, 20, 7, 22, 24) serving as reinforcing ribs extend radially outwards towards the outer edge of the base (2).

4. Housing according to claim 1, characterised in that the electrical or electromagnetic component (9, 11, 14, 13, 17) is arranged in the housing (1, 2) so that a free space (6) remains between the base (2) and the electrical or electromagnetic component (9, 11, 14, 13, 17).

5. Housing according to at least one of the preceding claims, characterised in that a resiliently or plastically deformable damping agent (26) is arranged between the base (2) of the housing (1, 2) and the electrical or electromagnetic component (9, 11, 14, 13, 17).

6. Housing according to claim 5, characterised in that the damping agent is formed by a resiliently or plastically deformable casting compound.

7. Housing according to claim 5, characterised in that the damping agent consists of a resiliently or plastically deformable disc.

8. Housing according to at least one of the preceding claims 5 to 7, characterised in that the damping agent consists of a silicone gel.

9. Housing according to at least one of the preceding claims, characterised in that the housing (1, 2) consists of a metallic material.

10. Housing according to at least one of the preceding claims, characterised in that the tubular body (1) of the housing (1, 2) and the centrally arranged raised part (5) of the base (2) have a higher degree of hardness than the region of the base (2) extending from the raised part or depressed area (5) towards the tubular body (1).

11. Housing according to at least one of the preceding claims, characterised in that the base (2) is constructed to bow away from the interior of the housing.

12. Housing according to at least one of the preceding claim 1, characterised in that the raised parts (3, 18, 20, 7, 22, 24, 27, 30, 32, 34, 36, 38) are located on the side of the base (2, 28) facing towards the interior of the housing (1, 2).

13. Housing according to at least one of the preceding claims, characterised in that the raised parts (3, 18, 20, 7, 22, 24, 27, 30, 32, 34, 36, 38) are located on the side of the base (2, 28) facing away from the interior of the housing (1, 2).

14. Housing according to at least one of the preceding claims, characterised in that the housing consists of plastics material and the raised parts in the form of reinforcing ribs are formed by mouldings (27, 30, 32, 34, 36, 38) on the base (28) of the housing.

15. Housing according to at least one of the preceding claims, characterised by the following features:
a) the housing (1, 2) comprises a transitional region (10) joining the tubular body (1) to the base (2);
b) the electrical or electromagnetic component is part of a rotational speed sensor and comprises a coil carrier (9, 11, 14), a coil winding (13) arranged thereon, and a core (17) arranged in the coil carrier (9, 11, 14) and extending in the direction of the longitudinal axis of the coil carrier (9, 11, 14), one end of the core (17) facing towards the base (2) of the housing (1, 2);
c) the coil carrier (9, 11, 14) with coil winding (13) and core (17) is arranged in the housing (1, 2) in such manner that its lies with its end (14) facing the base (2) of the housing (1, 2) on the transitional region (10) or on the outer edge region of the base (2).

16. Housing according to claim 15, characterised in that the core (17) is arranged in the coil carrier (9, 11, 14) so as to be movable in the direction of the longitudinal axis of the coil carrier (9, 11, 14) and is pressed with its one end against the base (2) of the housing (1, 2) by a spring element.

## Revendications

1. Boîtier pour un composant électrique ou électromagnétique, en particulier boîtier de capteur, selon les caractéristiques suivantes :
a) le boîtier se compose d'un corps tubulaire (1) fermé à sa première extrémité par un fond (2);
b) dans le boîtier (1, 2) est disposé un composant électrique ou électromagnétique (9, 11, 14, 13, 17);
caractérisé en ce que le fond (2, 28) présente des surélévations (3, 18, 20, 7, 22, 24, 27, 30, 32, 34, 36, 38), qui sont réalisées à la manière de nervures de renfort et qui s'étendent depuis la zone médiane du fond (2, 28) radialement vers l'extérieur en direction du bord extérieur du fond (2, 28) et sont déformables à la manière d'une zone ondulée.

2. Boîtier selon la revendication 1, caractérisé en ce que les surélévations (3, 18, 20, 7, 22, 24) sont formées par déformations obtenues par compression ou emboutissage du fond (2) du boîtier (1, 2).

3. Boîtier selon la revendication 1, caractérisé en ce que le fond (2) présente une surélévation (5) disposée centralement, à partir de laquelle les surélévations (3, 18, 20, 7, 22, 24) servant de nervures de renfort s'étendent radialement vers l'extérieur en direction du bord extérieur du fond (2).

4. Boîtier selon la revendication 1, caractérisé en ce que le composant électrique ou électromagnétique (9, 11, 14, 13, 17) est disposé dans le boîtier (1, 2) de sorte qu'entre le fond (2) et le composant électrique ou électromagnétique (9, 11, 14, 13, 17) subsiste un espace libre (6).

5. Boîtier selon au moins l'une des revendications précédentes, caractérisé en ce qu'entre le fond (2) du boîtier (1, 2) et le composant électrique ou électromagnétique (9, 11, 14, 13, 17) est placé un moyen d'amortissement (26) déformable élastiquement ou plastiquement.

6. Boîtier selon la revendication 5, caractérisé en ce que le moyen d'amortissement est constitué d'une masse de remplissage déformable élastiquement ou plastiquement.

7. Boîtier selon la revendication 5, caractérisé en ce que le moyen d'amortissement se compose d'un disque déformable élastiquement ou plastiquement.

8. Boîtier selon au moins l'une des revendications précédentes 5 à 7, caractérisé en ce que le moyen d'amortissement est un gel de silicium.

9. Boîtier selon au moins l'une des revendications précédentes, caractérisé en ce que le boîtier (1, 2) est en matériau métallique.

10. Boîtier selon au moins l'une des revendications précédentes, caractérisé en ce que le corps tubulaire (1) du boîtier (1, 2) et la surélévation (5) disposée centralement du fond (2) présentent un degré de dureté plus élevé que la zone du fond (2) s'étendant depuis la surélévation ou la cavité (5) en direction du corps tubulaire (1).

11. Boîtier selon au moins l'une des revendications précédentes, caractérisé en ce que le fond (2) est réalisé cintré en s'éloignant de l'espace intérieur du boîtier.

12. Boîtier selon au moins l'une des revendications précédentes, caractérisé en ce que les surélévations (3, 18, 20, 7, 22, 24, 27, 30, 32, 34, 36, 38) sont disposées sur le côté du fond (2, 28) tourné vers l'espace intérieur du boîtier (1, 2).

13. Boîtier selon au moins l'une des revendications précédentes, caractérisé en ce que les surélévations (3, 18, 20, 7, 22, 24, 27, 30, 32, 34, 36, 38) sont disposées sur le côté du fond (2, 28) écarté de l'espace intérieur (12) du boîtier (1, 2).

14. Boîtier selon au moins l'une des revendications précédentes, caractérisé en ce que le boîtier est en matière plastique et les surélévations réalisées à la manière de nervures de renfort sont formées par des façonnages (27, 30, 32, 34, 36, 38) sur le fond (28) du boîtier.

15. Boîtier selon au moins l'une des revendications précédentes, caractérisé par les caractéristiques suivantes :
a) le boîtier (1, 2) présente une zone de transition (10) reliant le corps tubulaire (1) au fond (2);
b) le composant électrique ou électromagnétique est un constituant d'un capteur de vitesse de rotation et comporte un support de bobine (9, 11, 14), un enroulement (13) disposé sur celui-ci et un noyau (17) disposé dans le support de bobine (9, 11, 14), s'étendant selon l'axe longitudinal du support de bobine (9, 11, 14), une extrémité du noyau (17) étant tournée vers le fond (2) du boîtier (1, 2);
c) le support de bobine (9, 11, 14) avec l'enroulement (13) et le noyau (15) est disposé dans le boîtier (1, 2) de manière à reposer avec son côté (14) tourné vers le fond (2) du boîtier (1, 2) sur la zone de transition (10) ou sur le bord extérieur du fond (2).

16. Boîtier selon la revendication 15, caractérisé en ce que le noyau (17) est disposé déplaçable selon l'axe longitudinal du support de bobine (9, 11, 14) dans le support de bobine (9, 11, 14) et est poussé par un élément élastique avec l'une de ses extrémités contre le fond (2) du boîtier (1, 2).
